## Europäisches Patentamt
## European Patent Office
## Office européen des brevets

(19)

(11) Numéro de publication: **0 117 773**
**B1**

(12)

# FASCICULE DE BREVET EUROPEEN

(45) Date de publication du fascicule du brevet:
**01.04.87**

(51) Int. Cl.⁴: **F 41 D 10/24,** F 41 D 10/42

(21) Numéro de dépôt: **84400112.3**

(22) Date de dépôt: **19.01.84**

(54) **Barillet motorisé pour le chargement des munitions dans un canon.**

(30) Priorité: **28.01.83 FR 8301309**

(43) Date de publication de la demande:
**05.09.84 Bulletin 84/36**

(45) Mention de la délivrance du brevet:
**01.04.87 Bulletin 87/14**

(84) Etats contractants désignés:
**AT BE CH DE GB IT LI LU NL SE**

(56) Documents cités:
**CH - A - 34 488**
**DE - A - 1 750 112**
**DE - B - 1 231 594**
**FR - A - 863 091**
**GB - A - 1 194 669**
**US - A - 2 456 618**
**US - A - 2 719 459**

(73) Titulaire: **FIVES-CAIL BABCOCK, Société anonyme, 7 rue Montalivet, F-75383 Paris Cedex 08 (FR)**

(72) Inventeur: **Lacoste, Bernard, 34, rue J. Perdrix, F-59300 Valenciennes (FR)**

(74) Mandataire: **Fontanié, Etienne, FIVES-CAIL BABCOCK 7, rue Montalivet, F-75383 Paris Cedex 08 (FR)**

# Description

La présente invention concerne les dispositifs de chargement des munitions dans un canon monté sur la tourelle d'un engin blindé comprenant au moins un barillet dans lequel sont aménagés plusieurs logements régulièrement répartis autour de l'axe de rotation et destinés à recevoir les munitions. Le barillet peut être disposé à l'arrière du canon de telle sorte que l'on puisse amener par rotation chaque logement dans l'alignement de la culasse. Il peut aussi être décalé latéralement par rapport au canon, les munitions étant dans ce cas transférées une à une sur une goulotte disposée à l'arrière du canon avant d'être introduites dans la culasse.

L'invention a plus particulièrement pour objet un barillet motorisé du type décrit dans le document DE-B-1 231 594 pour le chargement des munitions dans un canon comprenant un carter fixe, un corps rotatif dans lequel sont aménagés plusieurs logements régulièrement répartis autour de son axe et destinés à recevoir chacun une munition et un système à cames et galets conçu pour transformer le mouvement alternatif, parallèle à l'axe du barillet, d'un piston en un mouvement de rotation pas à pas du corps du barillet.

On a proposé de motoriser le barillet au moyen d'un mécanisme actionné par un moteur électrique et placé à l'avant ou à l'arrière du barillet. On a également proposé (DE-B-1 231 594) d'entraîner le barillet en rotation au moyen d'un système à cames et galets placé à l'avant du barillet et actionné par un piston sur lequel agissent les gaz s'échappant du canon pendant le tir. Ces mécanismes sont généralement encombrants ce qui constitue un inconvénient important compte tenu du peu de place disponible dans la tourelle. On connait enfin des dispositifs d'entrainement de poussoirs rotatifs (US-A 2 456 618 et US-A 2 719 459) comportant un moteur électrique placé à l'intérieur de l'arbre creux du poussoir. Cette solution oblige de donner à l'arbre un diamètre relativement important.

Le but de la présente invention est de réduire l'encombrement du barillet en logeant à l'intérieur de son arbre un mécanisme spécialement conçu.

Conformément à la présente invention, le corps du barillet comprend un arbre creux dans lequel sont logés le système à cames et galets ainsi qu'un vérin actionnant ledit système, un groupe d'éléments, cames ou galets, de ce système étant solidaire en rotation de l'arbre du barillet tandis que les éléments de l'autre groupe sont montés sur un arbre qui est disposé longitudinalement à l'intérieur de l'arbre du barillet et qui est lié au piston dudit vérin, en ce que ledit vérin est solidaire du carter du barillet et en ce que des moyens rendus solidaires dudit carter sont prévus à une extrémité du barillet pour guider longitudinalement ledit arbre et pour interdire sa rotation, le vérin étant monté à l'autre extrémité du barillet, au bout dudit arbre.

Pour permettre une commande manuelle de la rotation du barillet, le système à cames et galets agit sur un tube disposé à l'intérieur de l'arbre creux du corps du barillet, coaxialement à celui-ci, et dans lequel sont logés le vérin et le système à cames et galets, et ce tube et l'arbre creux sont rendus solidaires en rotation par l'intermédiaire d'un manchon concentrique audit tube, lié à l'arbre creux par un accouplement permanent autorisant les déplacements axiaux du manchon par rapport à l'arbre et lié audit tube par un accouplement débrayable par déplacement axial du manchon par rapport au tube, ce manchon étant muni d'un volant permettant de faire tourner le manchon et le barillet, après avoir débrayé l'accouplement entre le manchon et le tube.

En variante, la commande manuelle du barillet peut être réalisée par l'intermédiaire du système à cames et galets. Pour cela, un groupe d'éléments du système à cames et galets est monté sur un arbre disposé à l'intérieur de l'arbre creux du barillet, coaxialement à celui-ci, et solidaire en rotation d'une pièce qui est montée rotative sur le carter du barillet. Un système de commande manuelle permet d'entraîner cette pièce en rotation et un dispositif de verrouillage interdit normalement cette rotation.

D'autres caractéristiques apparaîtront à la lecture de la description qui suit et se réfère au dessin l'accompagnant qui montre, à titre d'exemple non limitatif, deux modes de réalisation de l'invention et sur lesquels:

La figure 1 est une vue en coupe longitudinale d'un barillet réalisé conformément à l'invention,

la figure 2 est une coupe transversale, à plus grande échelle, du mécanisme d'entraînement en rotation du barillet,

la figure 3 est une vue développée des deux cames du mécanisme d'entraînement du barillet, et

la figure 4 est une vue en coupe longitudinale d'une autre forme de réalisation de l'invention.

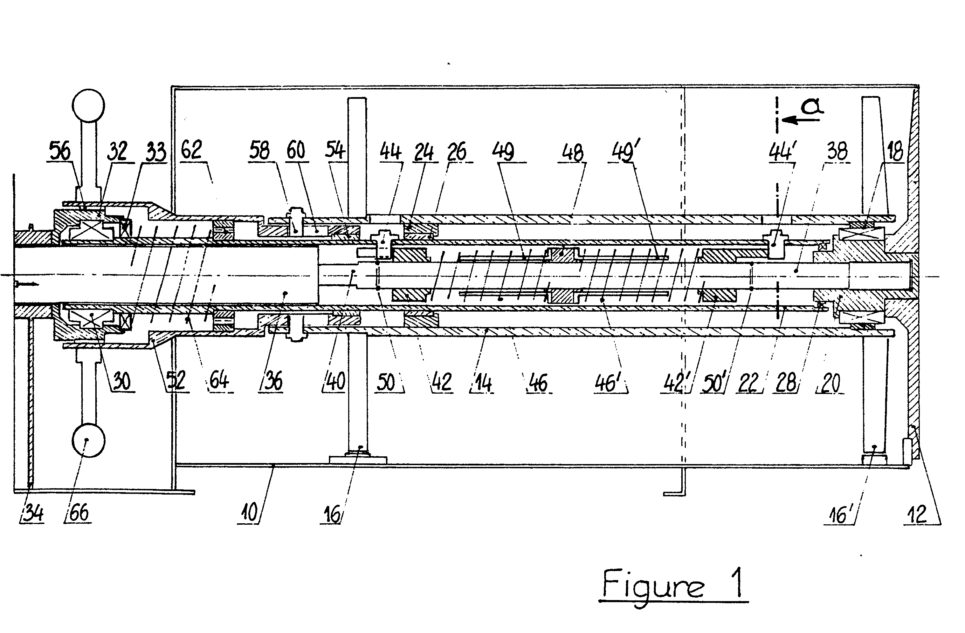

Le barillet représenté sur la figure 1 est constitué par un carter cylindrique fixe 10, fermé à une de ses extrémités par un fond 12, et par un corps de barillet formé d'un arbre tubulaire 14 sur lequel sont soudées deux étoiles à six branches 16 et 16' formant six logements régulièrement répartis autour de l'axe du barillet et destinés à recevoir les munitions.

Le corps du barillet est supporté à son extrémité adjacente au fond 12 par un palier à roulements 18 monté sur une pièce de support et de guidage 20 fixée sur le fond 12, dans l'axe du barillet. L'arbre tubulaire 14 prend par ailleurs appui, près de son autre extrémité, sur un tube 22, par l'intermédiaire d'une couronne 24 et d'un coussinet 26. Le tube 22 qui est placé à l'intérieur de l'arbre 14, coaxialement à celui-ci, est supporté à ses extrémités par des paliers à roulement 28 et 30 montés, respectivement, sur la pièce 20 et dans une cuvette 32 fixée sur un support 34 solidaire du carter du barillet.

A l'intérieur du tube 22 et coaxialement à celui-ci sont placés un vérin 36 et un arbre cannelé 38 dont une extrémité est fixée rigidement à la tige du piston 40 du vérin. Le corps du vérin est fixé à la cuvette 32. Les chambres du vérin sont alimentées à travers des passages ménagés dans le fond de la cuvette 32 et dans l'épaisseur de la paroi du corps du vérin. L'arbre cannelé 38 est monté coulissant dans un alésage de la pièce 20 et des cannelures formées sur une partie de cet alésage coopèrent avec les cannelures de l'arbre pour interdire sa rotation.

Deux cames annulaires 42 et 42' sont montées coulissantes sur l'arbre 38. Le montage est réalisé au moyen de manchons cannelés solidaires des cames et pouvant glisser sur l'arbre 38, les cannelures coopérantes des manchons et de l'arbre interdisant toute rotation des cames autour de l'arbre.

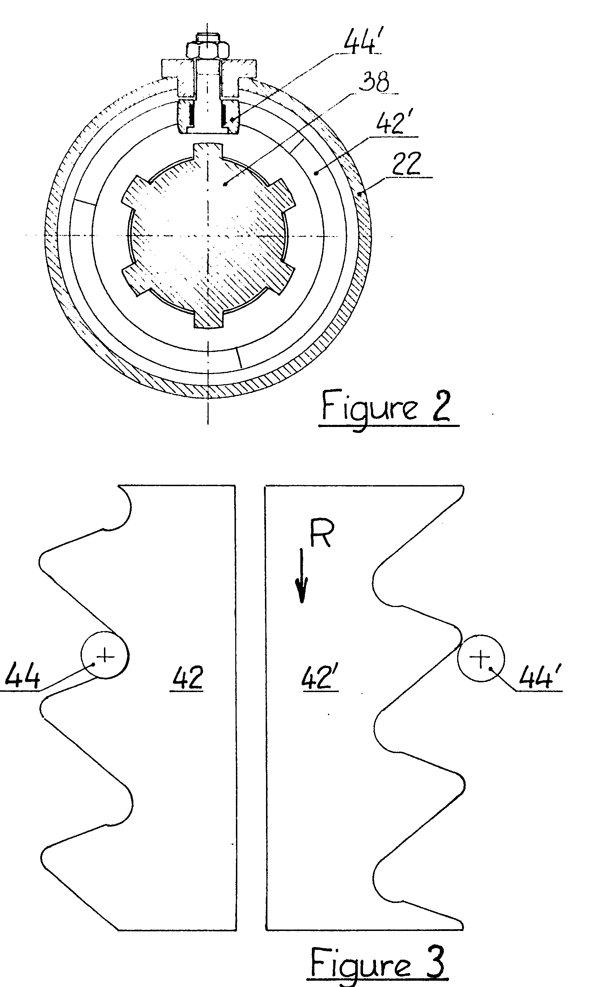

Les cames qui sont représentées développées et côte à côte sur la figure 2 ont un profil en dents de scie. Dans l'exemple représenté elles comportent chacune trois dents, et, d'une manière générale, le nombre de dents sera toujours égal à la moitié du nombre de logements du barillet. Les cames sont montées sur l'arbre comme représenté sur la figure 2, c'est-à-dire que leurs dents sont tournées vers l'extrémité adjacente de l'arbre 38 et elles sont décalées angulairement l'une par rapport à l'autre d'un demi-pas.

Chaque came coopère avec un galet 44, 44' dont l'axe, qui est disposé radialement, est fixé sur la paroi du tube 22, les axes des deux galets étant alignés sur une même génératrice du tube.

Lorsque le piston du vérin 36 se trouve dans l'une de ses positions limites, les cames sont maintenues en contact avec les galets respectifs par des ressorts 46, 46' comprimés entre les cames et une bague d'arrêt 48 fixée sur l'arbre 38. L'un des galets, le galet 44 sur les figures 1 et 3, se trouve alors au fond des dents et l'autre galet 44' se trouve sur le sommet d'une dent. On remarquera que l'action du ressort 46' sur ce dernier galet a tendance, par suite de l'inclinaison des dents, à faire tourner le tube 22 dans le sens de la flèche R. Mais cette rotation est interdite par le galet 44 qui est retenu dans le logement formé au fond des dents de la came 42, ce logement ayant une forme telle que le galet ne peut pas s'en échapper lorsqu'il est soumis à un effort circonférentiel dans le sens de la flèche R.

Lorsque le piston du vérin 36 et l'arbre 38 sont déplacés vers la droite, à partir des positions qu'ils occupent sur la figure 1, les cames 42 et 42' restent dans leurs positions initiales jusqu'à ce qu'un anneau 50 logé dans une gorge de l'arbre 38 vienne buter contre la came 42. Celle-ci est alors entraînée par l'arbre 38 et grâce à ce déplacement le galet 44 est dégagé du fond des dents de cette came ce qui autorise la rotation du tube 22. Sous l'action du ressort 46' qui pousse la came 42' contre le galet 44' le tube 22 tourne jusqu'à ce que ce galet arrive au fond des dents, ce qui correspond à une rotation d'un sixième de tour. Le tube 22 est alors bloqué dans sa nouvelle position, et il ne pourra tourner, du même angle et dans le même sens, que lorsque le piston du vérin 36 et l'arbre 38 seront déplacés en sens inverse. Ainsi, à chaque course du piston du vérin, dans un sens ou dans l'autre, le tube 22 tournera d'un sixième de tour. Les bouts de tube 49 et 49' fixés sur la bague 48, de part et d'autre de celle-ci servent, d'une part, à soutenir les ressorts 46 et 46' et, d'autre part, à pousser la came adjacente, après compression du ressort respectif, si la force exercée par celui-ci n'est pas suffisante pour faire tourner le barillet.

La rotation du tube 22 est transmise à l'arbre tubulaire 14 du barillet par un manchon 52 disposé concentriquement au tube 22 et supporté par ce dernier et par la cuvette 32, par l'intermédiaire de coussinets 54 et 56.

Le manchon est accouplé à l'arbre 14 par des galets 58 dont les axes, disposés radialement, sont fixés sur l'arbre et qui sont logés dans des lumières longitudinales 60 du manchon; ce montage autorise les déplacements longitudinaux du manchon par rapport à l'arbre.

Le manchon est, par ailleurs, accouplé au tube 22 par un accouplement à dents 62 qui est normalement maintenu en prise par un ressort 64 comprimé entre le manchon et une butée à roulements 33 s'appuyant sur le bord de la cuvette 32.

Sur le manchon 52 est fixé un volant 66 qui permet, après avoir débrayé l'accouplement 62 en déplaçant le manchon axialement vers le support 34, de faire tourner le barillet, dans un sens ou dans l'autre.

Les éléments du système à cames et galets transformant les mouvements rectilignes alternatifs du vérin en rotation pas à pas pourraient être agencés différemment. Les cames pourraient, par exemple, être montées, sur le tube 22 et les galets sur l'arbre 38. Les accouplements entre le manchon 52, le tube 22 et l'arbre 14 pourraient être réalisés différemment. Le vérin hydraulique 36 pourrait être remplacé par un vérin électrique (plongeur et électroaimant). Au lieu d'être cannelé, l'arbre 38 pourrait avoir une section non circulaire, polygonale ou autre, les alésages de la pièce 20 et des cames 42 et 42' ayant un profil complémentaire pour interdire la rotation de l'arbre et des cames.

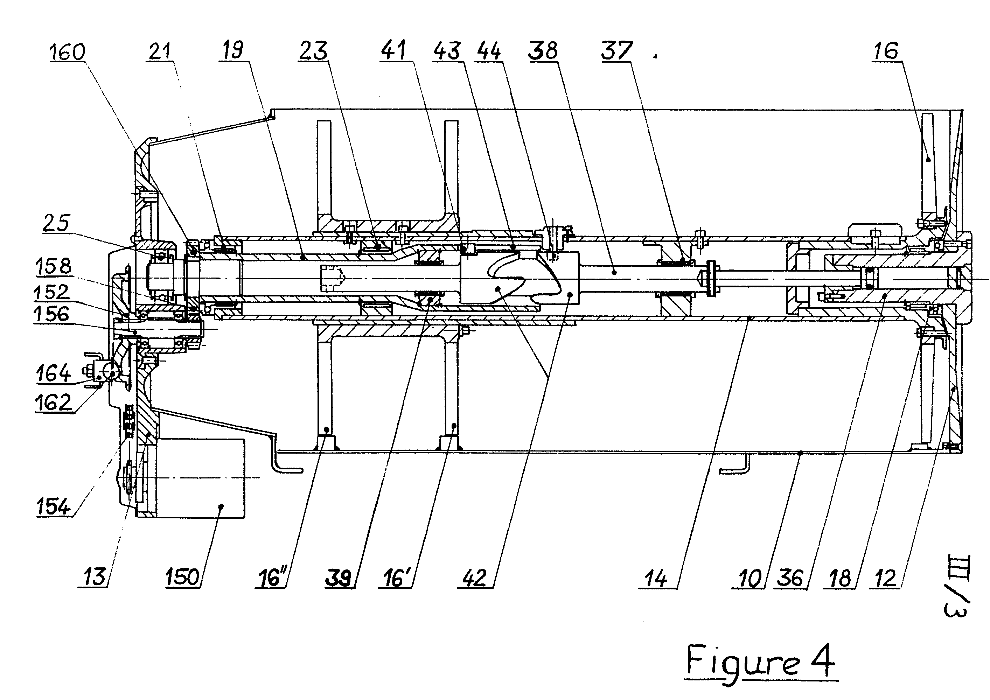

Dans le mode de réalisation de la figure 4, le corps du barillet est supporté, d'une part, par le palier 18 monté sur le carter 10 et, d'autre part, par un bout d'arbre 19 emmanché dans l'arbre 14 du barillet par l'intermédiaire de paliers 21 et 23 autorisant leur rotation relative. L'extrémité extérieure du bout d'arbre 19 est montée sur un palier 25 porté par le flasque 13 du carter 10.

Un mécanisme de commande manuelle comprenant une manivelle, non représentée, une boîte de réduction 150, une roue dentée 152 entraînée, au moyen d'une chaîne 154, par le pignon de sortie de la boîte 150 et fixée sur un arbre 156, un pignon 158 solidaire de cet arbre et un pignon 160 claveté sur le bout d'arbre 19 et en prise avec le pignon 158, permet d'entraîner le bout d'arbre en rotation. Ce mécanisme est normalement verrouillé par un dispositif constitué par une bille 162 logée en partie dans un trou évasé de la roue 152 et en partie dans une cavité d'un bras 164 qui est articulé sur le flasque 13 et est poussé élastiquement par un ressort taré vers la roue 152. La force de ce ressort est réglée pour interdire la rotation du bout d'arbre 19 lorsque le mécanisme de commande manuelle n'est pas actionné. Par contre, lorsqu'on commande manuellement la rotation de la roue 152, par l'intermédiaire de la boite de réduction 150, cette force n'est pas suffisante pour s'y opposer. La roue 152 comporte plusieurs trous correspondant aux différentes positions que doit occuper le barillet pour amener les munitions sur le refouloir du canon.

Le vérin 36 et l'arbre 38 portant les cames 42 sont placés à l'intérieur de l'arbre 14 et coaxialement à celui-ci. L'arbre 38 est monté sur des bagues de guidage axial 37 et 39 portées, respectivement, par l'arbre 14 et le bout d'arbre 19 dont la partie intérieure à l'arbre 14 est creuse; il est rendu solidaire en rotation du bout d'arbre 19 par un ergot 41 logé dans une fente longitudinale 43 du bout d'arbre. Les cames 42 coopèrent avec des galets 44 montés sur l'arbre 14.

Le déplacement longitudinal de l'arbre 38, dans un sens ou dans l'autre, au moyen du vérin 36, provoque la rotation du barillet d'un sixième de tour, la rotation de cet arbre étant interdite par la bille 162 qui bloque la roue 152 et, par conséquent, le bout d'arbre 19. Les cames 42 sont montées à égale distance des extrémités de l'arbre 38, de sorte qu'il est possible d'inverser le sens de rotation du barillet en retournant l'arbre 38 bout pour bout.

En cas de panne du système hydraulique alimentant le vérin 36, on peut faire tourner le barillet au moyen du système de commande manuelle décrit plus haut qui permet d'entraîner en rotation le bout d'arbre 19, l'arbre 38 et, par l'intermédiaire du système à cames et galets, qui est irréversible, l'arbre 14 du barillet.

## Revendications

1. Barillet motorisé pour le chargement des munitions dans un canon comprenant un carter fixe (10), un corps rotatif (14, 16, 16') dans lequel sont aménagés plusieurs logements régulièrement répartis autour de son axe et destinés à recevoir chacun une munition et un système à cames et galets (42–42', 44–44') conçu pour transformer le mouvement alternatif, parallèle à l'axe du barillet, d'un piston (40) en un mouvement de rotation pas à pas du corps du barillet, caractérisé en ce que le corps du barillet comprend un arbre creux (14) dans lequel sont logés le système à cames et galets ainsi qu'un vérin (36) actionnant ledit système, un groupe d'éléments, cames ou galets, de ce système étant solidaire en rotation de l'arbre (14) du barillet tandis que les éléments de l'autre groupe sont montés sur un arbre (38) qui est disposé longitudinalement à l'intérieur de l'arbre du barillet et qui est lié au piston dudit vérin, en ce que ledit vérin est solidaire du carter du barillet et en ce que des moyens (19, 20) rendus solidaires dudit carter sont prévus à une extrémité du barillet pour guider longitudinalement ledit arbre (38) et pour interdire sa rotation, le vérin (36) étant monté à l'autre extrémité du barillet, au bout dudit arbre (38).

2. Barillet selon la revendication 1, caractérisé en ce que l'arbre (38) portant un groupe d'éléments du système à cames et galets est rendu solidaire en rotation d'une pièce de support et de guidage (19, 20) disposée à une extrémité de l'arbre du barillet et solidaire du carter (10) du barillet.

3. Barillet selon la revendication 2, caractérisé en ce que ladite pièce (19) est montée rotative sur le carter (10) du barillet et est rendue solidaire de celui-ci par un dispositif de verrouillage (162, 164) et un système de commande manuelle (150 à 160) est prévu pour faire tourner ladite pièce.

4. Barillet selon la revendication 3, caractérisé en ce que le dispositif de verrouillage (162, 164) est incorporé au système de commande manuelle (150 à 160).

5. Barillet selon la revendication 1 ou 2, caractérisé en ce que ledit vérin (36) et le système à cames et galets (42–42', 44–44') sont logés dans un tube (22) monté rotatif sur le carter (10) et disposé à l'intérieur de l'arbre (14) du corps du barillet, coaxialement à celui-ci, un groupe d'éléments, cames ou galets, de ce système étant montés sur ledit tube, et en ce que ledit tube et l'arbre (14) sont rendus solidaires en rotation par l'intermédiaire d'un manchon (52) concentrique audit tube, lié audit arbre par un accouplement (58, 60) autorisant les déplacements axiaux du manchon par rapport à l'arbre et lié audit tube par un accouplement (62) débrayable par déplacement axial du manchon par rapport au tube.

6. Barillet selon la revendication 5, caractérisé en ce que ledit manchon (52) est muni d'un volant permettant de faire tourner le corps du barillet après que l'accouplement (62) entre le manchon et le tube (22) ait été débrayé.

7. Barillet selon la revendication 5 ou 6, caractérisé en ce que ledit tube (22) est supporté à ses extrémités par des paliers (28, 30) montés sur des supports solidaires du carter (10), en ce que l'arbre (14) du corps du barillet est supporté à l'une de ses extrémités par un palier (18) monté sur l'un desdits supports et près de son autre extrémité par ledit tube, et en ce que ledit manchon (52) est supporté par l'autre support et par ledit tube.

8. Barillet selon la revendication 3 ou 4, caractérisé en ce que ladite pièce (19) est constituée par un bout d'arbre emmanché dans l'arbre (14) du corps rotatif du barillet, à une de ses extrémités, cet emmanchement étant réalisé au moyen de paliers (21, 23) autorisant la rotation relative de l'arbre et du bout d'arbre.

9. Barillet selon la revendication 8, caractérisé en ce que la partie du bout d'arbre (19) qui est logée dans l'arbre (14) du barillet est creuse et porte des moyens de guidage longitudinal (39) de l'arbre (38) portant un groupe d'éléments du système à cames et galets (42, 44) et en ce que cet arbre est rendu solidaire en rotation du bout d'arbre au moyen d'un ergot (41) fixé sur l'arbre et reçu dans une fente longitudinale (43) du bout d'arbre.

10. Barillet selon l'une quelconque des revendications précédentes, caractérisé en ce que les dites cames (42, 42') sont des cames annulaires, à profil en dents de scie, et comportant un nombre de dents égal à la moitié du nombre de logements du corps du barillet, et en ce que les deux cames (42, 42') sont décalées angulairement l'un par rapport à l'autre d'un angle égal à l'écart angulaire entre deux logements du barillet.

**Patentansprüche**

1. Angetriebene Ladetrommel für Kanonen, bestehend aus einem feststehenden Gehäuse (10), einem Drehkörper (14, 16, 16'), in dem mehrere um dessen Achse regelmässig verteilte und für die Aufnahme von je einer Munition vorgesehene Vertiefungen angeordnet sind, sowie einem System mit Nocken und Rollen (42–42', 44–44'), das zur Umwandlung der zur Achse der Ladetrommel parallelen Hin- und Herbewegung eines Kolbens (40) in eine schrittweise Drehbewegung des Ladetrommelkörpers ausgelegt ist, dadurch gekennzeichnet, dass der Ladetrommelkörper eine Hohlwelle (14) aufweist, in der das Nocken-Rollen-System sowie ein dieses System betätigender Zylinder (36) untergebracht sind, wobei eine Gruppe von Bauteilen, Nocken bzw. Rollen, dieses Systems mit der Welle (14) der Ladetrommel kraftschlüssig drehverbunden ist, während die Bauteile der anderen Gruppe auf einer Welle (38) montiert sind, die innerhalb der Ladetrommelwelle längs angeordnet und mit dem Kolben des Zylinders (36) verbunden ist, dass der Zylinder mit dem Gehäuse der Ladetrommel kraftschlüssig verbunden ist und dass mit dem Gehäuse kraftschlüssig verbundene Mittel (19, 20) an einem Ende der Ladetrommel vorgesehen sind, um die Welle (38) in der Längsrichtung zu führen und deren Drehung zu verhindern, wobei der Zylinder (36) am anderen Ende der Ladetrommel, am Ende der obenerwähnten Welle (38) montiert ist.

2. Ladetrommel nach Anspruch 1, dadurch gekennzeichnet, dass die eine Gruppe von Bauteilen des Nocken-Rollen-Systems tragende Welle (38) mit einem Stütz- und Führungsteil (19, 20) kraftschlüssig drehverbunden wird, das an einem Ende der Ladetrommelwelle angeordnet und mit dem Gehäuse (10) der Ladetrommel kraftschlüssig verbunden ist.

3. Ladetrommel nach Anspruch 2, dadurch gekennzeichnet, dass das Teil (19) auf dem Ladetrommelgehäuse (10) drehend montiert ist, und durch eine Verriegelungsvorrichtung (162, 164) mit diesem kraftschlüssig verbunden wird, und dass ein Handsteuersystem (150 bis 160) für die Drehung dieses Teils vorgesehen ist.

4. Ladetrommel nach Anspruch 3, dadurch gekennzeichnet, dass die Verriegelungsvorrichtung (162, 164) in dem Handsteuersystem (150 bis 160) eingebaut ist.

5. Ladetrommel nach Anspruch 1 oder 2, dadurch gekennzeichnet, dass der Zylinder (36) sowie das System mit Nocken und Rollen (42–42', 44–44') in einem auf dem Gehäuse (10) drehmontierten und innerhalb der Welle (14) und zu dieser coaxial angeordneten Rohr (22) untergebracht sind, wobei eine Gruppe von Bauteilen, Nocken bzw. Rollen, dieses Systems auf diesem Rohr montiert sind, und dass das Rohr (22) und die Welle (14) mittels einer zum Rohr konzentrischen Muffe (52) kraftschlüssig drehverbunden werden, die mit der Welle über eine die Axialbewegungen der Muffe der Welle gegenüber ermöglichende Kupplung (58, 60) und mit dem Rohr über eine durch Axialbewegung der Muffe dem Rohr gegenüber auskuppelbare Kupplung (62) verbunden ist.

6. Ladetrommel nach Anspruch 5, dadurch gekennzeichnet, dass die Muffe (52) mit einem Handrad versehen ist, mittels dessen der Ladetrommelkörper drehen kann, nachdem die Kupplung (62) zwischen der Muffe und dem Rohr (22) ausgekuppelt wurde.

7. Ladetrommel nach Anspruch 5 oder 6, dadurch gekennzeichnet, dass das Rohr (22) an seinen Enden durch Lager (28, 30) getragen wird, die auf mit dem Gehäuse (10) kraftschlüssig verbundenen Auflagen montiert sind, dass die Ladetrommelkörperwelle (14) an einem Ende durch ein Lager (18) getragen wird, das auf einem der obenerwähnten Auflagen montiert ist, und in der Nähe des anderen Endes durch das Rohr (22) getragen wird, und dass die Muffe (52) durch die andere Auflage und durch das Rohr getragen wird.

8. Ladetrommel nach Anspruch 3 oder 4, dadurch gekennzeichnet, dass das Teil (19) aus einem in der Welle (14) des Drehkörpers der Ladetrommel, an einem ihrer Enden, eingesteckten Wellenstumpf besteht, wobei diese Einsteckverbindung mittels Lager (21, 23) erfolgt, die die Relativdrehung der Welle und des Wellenstumpfes ermöglichen.

9. Ladetrommel nach Anspruch 8, dadurch gekennzeichnet, dass der in der Ladetrommelwelle eingesteckte Wellenstumpfteil (19) hohl ist und Mittel (39) zur Längsführung der Welle (38) aufweist, die eine Gruppe von Bauteilen des Systems mit Nocken und Rollen (42, 44) trägt, und dass diese Welle mittels eines darauf befestigten und in einem Längsschlitz (43) des Wellenstumpfes eingeführten Vorsprungs (41) mit dem Wellenstumpf kraftschlüssig verbunden wird.

10. Ladetrommel nach irgendeinem der vorgehenden Ansprüche, dadurch gekennzeichnet, dass die Nocken (42, 42') Ringnocken mit Sägezahnprofil sind, deren Zahnanzahl gleich der Hälfte der Vertiefungen im Ladetrommelkörper ist, und dass die beiden Nocken (42, 42') gegeneinander winklig versetzt sind um einen Winkel, der dem Winkelabstand zwischen zwei Vertiefungen der Ladetrommel gleich ist.

**Claims**

1. Powered drum for loading ammunitions in a gun comprising a stationary casing (10), a rotary body (14, 16, 16') provided with several chambers which are evenly distributed around its axis and each one of which is intended to receive an ammunition, and a cam and roller system (42–42', 44–44') designed to convert the alternating motion, parallel to the loading drum axis, of a piston (40) into a step-by-step rotating motion of the loading drum body, characterized by the fact that the loading drum body comprises a hollow shaft (14) which accommodates the cam and roller system as well as a cylinder jack (36) which actuates the said system, a group of components, cams or rollers, of this system rotating interdependently with the loading drum shaft (14) whereas the components of the other group are mounted on a shaft (38) which is placed horizontally inside the loading drum shaft and connected to the piston of the said cylinder jack, that the said cylinder jack is integral with the casing of the loading drum and that means (19, 20) made integral with the said casing are provided at one end of the loading drum to guide the said shaft (38) longitudinally and to prevent its rotation, the cylinder jack (36) being mounted at the other end of the loading drum, at the end of the said shaft (38).

2. Loading drum according to claim 1, characterized by the fact that the shaft (38) which supports a group of components of the cam and roller system is made interdependent in rotation with a supporting and guiding part (19, 20) placed at one end of the loading drum shaft and integral with the loading drum casing (10).

3. Loading drum according to claim 2, characterized by the fact that the said part (19) is rotation-free mounted on the loading drum casing (10) and made interdependent with the latter by a locking device (162, 164) and provision has been made for a manual control system to rotate the said part.

4. Loading drum according to claim 3, characterized by the fact that the locking device (162, 164) is built into the manual control system (150 to 160).

5. Loading drum according to claim 1 or 2, characterized by the fact that the said cylinder jack (36) and the cam and roller system (42–42′, 44–44′) are located in a tube (22) rotation-free mounted on the casing (10) and placed inside the shaft (14) of the loading drum body, coaxially with respect to the latter, a group of components, cams or rollers, of this system being mounted on the said tube, and that the said tube and the shaft (14) are made interdependent in rotation via a sleeve (52) which is concentrical with the said tube, linked to the said shaft by a coupling (58, 60) allowing the axial displacements of the sleeve with respect to the shaft and linked to the said tube by a coupling (62) which is disengageable by axial displacement of the sleeve with respect to the tube.

6. Loading drum according to claim 5, characterized by the fact that the said sleeve (52) is fitted with a flywheel which is used to rotate the body of the loading drum after disengagement of the coupling (62) between the sleeve and the tube (22).

7. Loading drum according to claim 5 or 6, characterized by the fact that the said tube (22) is supported at its ends by bearings (28, 30) mounted on supports integral with the casing (10), that the shaft (14) of the loading drum body is supported at one of its ends by a bearing (18) mounted on one of the said supports and near its other end by the said tube, and by the fact that the said sleeve (52) is supported by the other support and by the said tube.

8. Loading drum according to claim 3 or 4, characterized by the fact that the said part (19) consists of a trunnion fitted into the shaft (14) of the rotary body of the loading drum, at one of its ends, such fitting being carried out by means of bearings (21, 23) allowing the relative rotation of the trunnion and the shaft end.

9. Loading drum according to claim 8, characterized by the fact that the part of the trunnion (19) which is located in the shaft (14) of the loading drum is hollow and fitted with means for longitudinally guiding the shaft (38) which supports a group of components of the cam and roller system (42, 44), and that this shaft is made interdependent in rotation with the trunnion by means of a pin (41) fixed onto the shaft and received in a longitudinal slot (4″) in the trunnion.

10. Loading drum, according to any of the preceding claims, characterized by the fact that the said cams (42, 42′) are ring-shaped cam, with a saw-toothed profile, and are made up of a number of teeth equal to half the number of chambers in the body of the loading drum, and that both cams (42, 42′) are shifted angularly with respect to each other by an angle equal to the angle difference between two chambers in the loading drum.

Figure 1

II/3

44'
38
42'
22

## Figure 2

R

44    42    42'    44'

## Figure 3

Figure 4

0 117 773

III/3